# EUROPEAN PATENT APPLICATION

(11) **EP 1 482 408 A2**
(43) Date of publication of application: **01.12.2004**
(21) Application number: 04251705.2
(22) Date of filing: 24.03.2004
(51) Int. Cl.: G06F 9/445

(54) **Operations console for a server application**

(30) Priority: 07.04.2003 US 408388
(71) Applicant: Hewlett-Packard Development Company, L.P., Houston, Texas 77070 (US)
(72) Inventor: Huscher, Anthony Alan, Rocklin, CA 95765 (US); Keller, Kevin Donald, Citrus Heights, CA 95621 (US); Whitlow, Troy Charles, Roseville, CA 95747 (US); Rand, Christopher James, Roseville, CA 95661 (US)
(74) Representative: Jackson, Richard Eric

(57) **Abstract**

In an embodiment, a method (400) of centrally controlling the settings in a computer system in an eRoom environment, includes: providing (405) an interface page by use of an operations console module; and adjusting settings (410-420) relating to an eRoom application by setting at least one variable in the interface page. The interface page may be related to look and feel settings, server settings, and/or security settings.

## Description

### TECHNICAL FIELD

Embodiments of the invention relate generally to server technology, and more particularly to an operations console for use with the eRoom server application or other suitable web-collaboration or e-business solution server-based tools.

### BACKGROUND

Web collaboration and e-business solutions may be provided by use of an application known as the eRoom server application ("eRoom") from eROOM TECHNOLOGIES, INCORPORATED <www.eroom.com>. The eRoom server application is disclosed in, for example, U.S. Patent No. 6,230,285 to Pito Salas et al. and in U.S. Patent No. 6,233,600 to Pito Salas et al. The eRoom application can run on the MICROSOFT WINDOWS 2000 server family of products from MICROSOFT CORPORATION. One version of eRoom can be deployed using either a built-in database engine which utilizes SQLAnywhere or deployed using the Microsoft SQL 2000 server or SQL Server 7 database. The eRoom application also has a dynamic link library (DLL) called "eRoomAPI.d11" (also referred to as the "eRoom DLL") which the application programming interface DLL. The eRoomAPI.dll is typically stored in an eRoom folder which is a folder in the Microsoft Internet Information Server's INETPUB\SCRIPTS directory. The core of the eRoom application typically installs in the eRoom folder. From the client's perspective, eRoom can be a very thin client that needs a browser to operate, such as Microsoft Internet Explorer 5.0 or newer (4.5 or newer for the Macintosh), or Netscape Navigator 4.08/4.6 or newer.

In the current eRoom server technology, there are deficiencies and disadvantages in trying to administer the eRoom application. For example, in the current technology, eRoom server administrators are unable to centrally control various features of the eRoom application environment such as the look-and-feel settings and notifications that are sent to eRoom application users. The current process is expensive as far as time and cost for the server support persons and for eRoom server administrators.

Therefore, the current technology is limited in its capabilities and suffers from at least the above constraints and deficiencies.

### SUMMARY OF EMBODIMENTS OF THE INVENTION

In one embodiment of the invention, a method of centrally controlling the settings in a computer system in an eRoom environment, includes: providing an interface page by use of an operations console module; and adjusting settings relating to an eRoom application by setting at least one variable in the interface page. The interface page may be related to look and feel settings, server settings, and/or security settings.

In another embodiment, an apparatus for centrally controlling the settings in a computer system in an eRoom environment, includes: an operations console module configured to provide an interface page and to adjust settings relating to an eRoom application by setting at least one variable in the interface page; and a processor configured to execute the operations console module.

These and other features of an embodiment of the invention will be readily apparent to persons of ordinary skill in the art upon reading the entirety of this disclosure, which includes the accompanying drawings and claims.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
Figure 1A is a functional block diagram of an apparatus (system) with an operations console, in accordance with an embodiment of the invention.
Figure 1B is a block diagram of an eRoom environment that can implement an embodiment of the invention.
Figure 2 is a screenshot diagram of a main control screen interface page, in accordance with an embodiment of the invention.
Figure 3 is a screenshot diagram of an interface page when a folder for a look and feel tool is selected, in accordance with an embodiment of the invention.
Figure 4 is a flowchart illustrating a method of permitting the settings and control of look and feel settings from a single location, in accordance with an embodiment of the invention.
Figure 5 is a screenshot diagram of an interface page when a folder for the server management tool is selected, in accordance with an embodiment of the invention.
Figure 6 is a flowchart illustrating a method of permitting the settings for a server in an eRoom environment, in accordance with an embodiment of the invention.
Figure 7 is a screenshot diagram of an interface page when a folder for the password and logins manager tool is selected, in accordance with an embodiment of the invention.
Figure 8 is a flowchart illustrating a method of permitting the settings of security features in an eRoom environment, in accordance with an embodiment of the invention.

### DETAILED DESCRIPTION OF PREFERRED EMBODIMENTS

In the description herein, numerous specific details are provided, such as examples of components and/or methods, to provide a thorough understanding of embodiments of the invention. One skilled in the relevant art will recognize, however, that an embodiment of the invention can be practiced without one or more of the specific details, or with other apparatus, systems, methods, components, materials, parts, and/or the like. In other instances, well-known structures, materials, or operations are not shown or described in detail to avoid obscuring aspects of embodiments the invention.

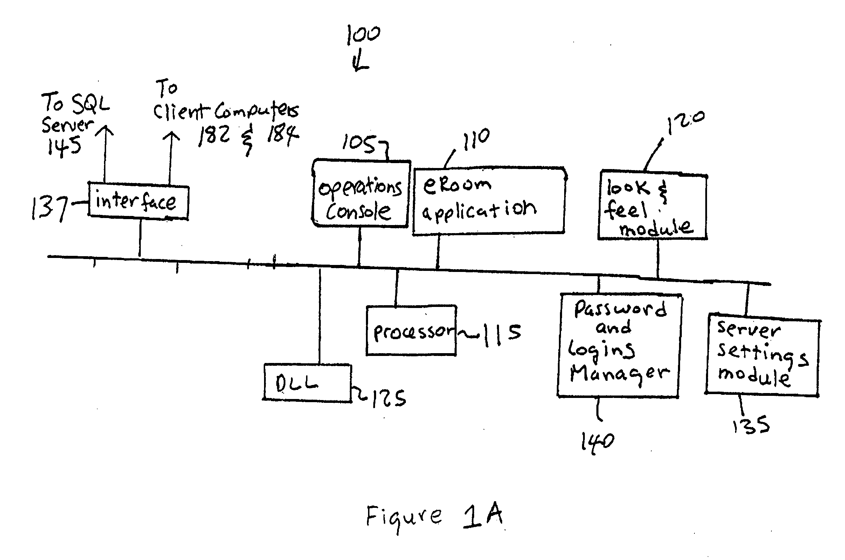

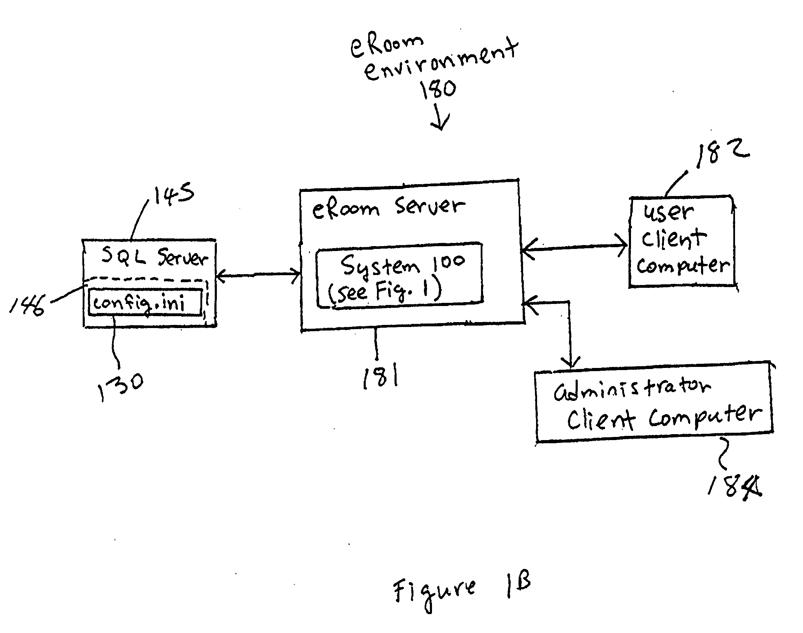

An embodiment of the invention provides an operation console module 105 (see Figure 1A) and method for administration of the eRoom server application. Although the examples described below specifically refer to the administration of the eRoom server application, it is within the scope of embodiments of the invention for the operation console module 105 to provide the ability to administer other suitable types of web-collaboration or e-business solution server-based tools. The operations console module 105 advantageously provides server administrators with the ability to change a number of features in eRoom instances and/or to change features in custom applications that could function with the eRoom application. The eRoom environment 180 in Figure 1B is also defined as an "eRoom instance".

In one embodiment of the invention, the operations console module 105 provides a central location to permit an administrator to configure or monitor various features of an environment 180 that use the eRoom application. For example, the operations console 105 can provide a central location for an administrator to change the look-and-feel settings of a computer system environment that use the eRoom application.

As another example, the operations console 105 can be configured to permit an administrator to configure notifications that are sent to designated recipients in the computer system environment that use the eRoom application.

As another example, the operations console 105 can be configured to provide to an administrator a summary of the server health from a system infrastructure viewpoint.

As another example, the operations console 105 can be configured to permit an administrator to configure the settings in a user aging method as described in, for example, commonly-assigned U.S. Patent Application No. 10/XXX,XXX, entitled "eRoom User Aging Tool And Method, by Anthony A. Huscher, Kevin D. Keller, and Troy C. Whitlow, filed on February 14, 2003, which is hereby fully incorporated herein by reference.

As another example, the operations console 105 can be configured to provide the ability to search a server (running the eRoom application) for particular room(s) that a user belongs to, in order to reduce the requirements for server support.

Figure 1A is a functional block diagram of an apparatus (system) 100 with an operations console module 105, in accordance with an embodiment of the invention. The apparatus 100 also includes an eRoom server application 110 and other modules as discussed below.

The eRoom server application 110 includes the eRoom standard native code and eRoom look & feel code. In an embodiment, the operations console module 105 can provide various web pages for an administrator to change a number eRoom features and any custom features that could be added to the eRoom application. The processor 115 can execute code in the operations console module 105, eRoom application 110, look and feel module 120, DLL 125, server settings module 135, and password and logins manager 140. The functionalities provided by the operations console module 105, eRoom application 110, look and feel module 120, DLL 125, server settings module 135, and password and logins manager 140 are described below in additional details.

An interface module 137 permits the system 100 to interact with other devices, such as an SQL (structured query language) server 145 or client computers 182 and 184 in Figure 1B. The client computers that interact with the system 100 may vary in number.

The operations console module 105 advantageously allows for the central administration of tools (i.e., programs) that can function in an environment 180 (see Figure 1B) that use the eRoom application 110. In other words, the operations console module 105 advantageously permits eRoom administrators and/or other network support individuals to manage multiple eRoom instances and change features in an eRoom instance such as look and feel settings, password and logon control, user and license management, communication with and notifications to users, and/or server health and performance. These tools help to enhance and/or streamline the standard eRoom application. For example, these tools may include a server settings tool, passwords and logins tool, and/or look and feel tool.

In one embodiment, the operations console module 105 can function with the eRoom application version 6.0.x, although the operations console module 105 can also be configured to function with other versions of the eRoom application.

It is noted that the various codes or modules in Figure 1A are shown as separate blocks for purposes of explaining the functionalities of embodiments of the invention. However, it is within the scope of embodiments of the invention to integrate the various modules into various configurations. For example, the codes in the look & feel module 120 and the password & logins manager 140 may be integrated to provide a module or code with the multiple functionalities.

Figure 1B is a block diagram of an example eRoom environment 180 which includes an eRoom server 181 which can implement the system 100 of Figure 1, in accordance with an embodiment of the invention. The eRoom server 181 interacts with the SQL server 145, user client computer 182, administrator client computer 184, and/or other client computers. The SQL server 145 stores a configuration file (config.ini file) 130 to permit each eRoom instance to be change by input of variables (e.g., names and/or values) on pages that are displayed on the administrator client computer 184, as described further below. The components shown in the eRoom environment 180 typically communicate with each other in a local area network (LAN).

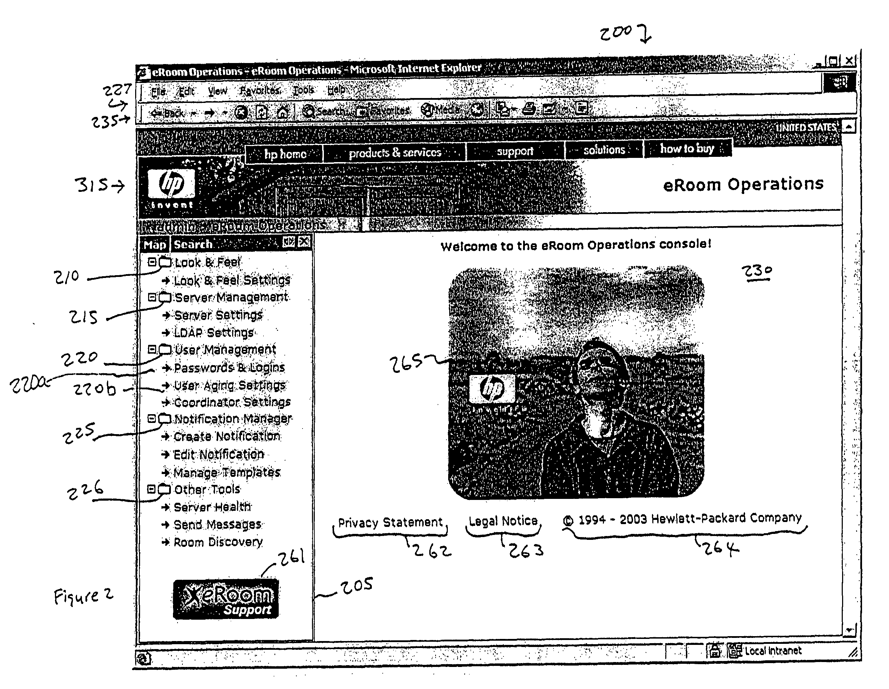

Figure 2 is a screenshot diagram of a main control screen page 200 that is provided by the operation console module 105, in accordance with an embodiment of the invention.

The page 200 is shown on a computer screen that is viewable by an eRoom administrator or other designated network support individuals from an administrator client computer 184 (Figure 1B). A command and control menu 205 permits system administrators to control or view a single eRoom instance, as discussed below. The menu 205 may be, for example, a dialog box that provides folders that can be used to access various administrative tools such as, for example, a look and feel tool 210, server management tool 215, user management tool 220, and/or other tools 225 and 226 that provide functions and/or settings for the eRoom application 110. These tools are used to manage an eRoom instance as described below in additional details.

A logo 261 may be provided to indicate, for example, the purpose of various tools in the menu 205. In the example of Figure 2, the logo 261 indicates that the various tools in the menu 205 are related for supporting enhancements for the eRoom application 110. The fields 262, 263, and 264 in a welcome screen 230 can provide links or text that indicate a privacy statement, legal notice, and vendor copyright notice, respectively. A field 265 in the welcome screen 230 may provide, for example, an image or text from the vendor of the tools in the menu 205. The welcome screen 230 can be customized based upon, for example, the customer's needs, usage messages, and customer's branding. A banner image 315 may be is displayed on top of every eRoom page by default.
The banner image 315 may, for example, indicate a logo of a vendor such as an "hp" logo from Hewlett-Packard Company.

The page 200 may also provide other features such as, for example, a tool bar 227 with the known "File", "Edit" "View", "Favorites", "Tools, and "Help" tool bar selections, and other tools 235 that provide known functions in a web page.

The operations console module 105 (Figure 105) may include code that is executed by the processor 115 in order to permit display of the command/control menu 205, welcome screen 230, and other features shown in the page 200 in Figure 2. This code contains algorithms or steps to permit the display of the various menus or features in the page 200 and may be programmed by use of standard programming techniques.

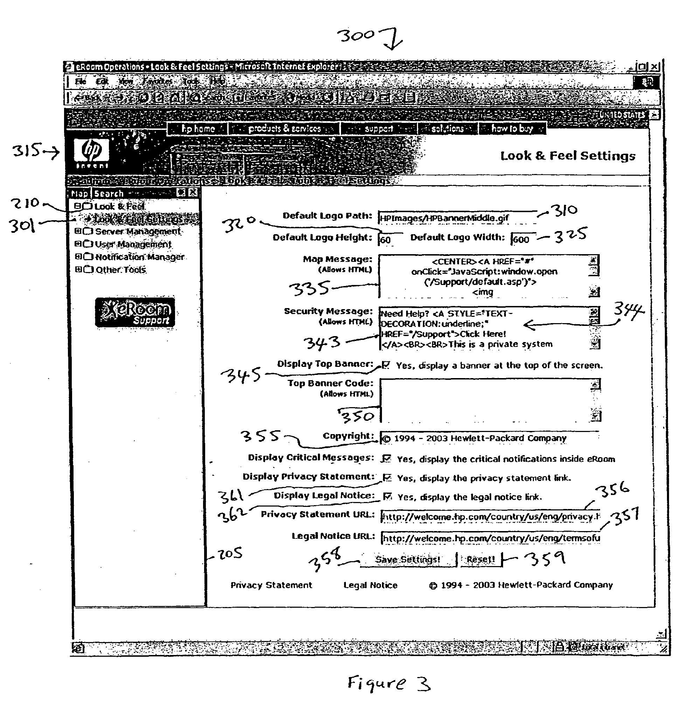

Figure 3 is a screenshot diagram of an interface page 300 when a folder for a look and feel tool 210 is selected by an administrator (or other authorized user), in accordance with an embodiment of the invention. The functionalities of the look and feel tool 210 are provided by code in the look and feel module 120 (see Figure 1A). The interface page 300 allows an eRoom administrator(s) to quickly modify the look and feel settings of their eRoom instance from a single control panel in his/her administrator client computer 184 (Figure 1B). An eRoom instance is shown as environment 180 in Figure 1B. An eRoom instance includes the eRoom code 110 that is required for the eRoom application to function. As an example, an administrator can modify the look and feel settings in his/her eRoom instance from his/her client computer 184 by selecting the look & feel settings field 301. The look and feel settings determine the how the look and feel (for an eRoom page provided by the eRoom application 110) appears to a user in the eRoom instance 180.

The look and feel settings that can be adjusted in the page 300 are now described. An eRoom CSS (cascading style sheet) sets the look and feel of an administrator's eRoom instance 180 (Figure 1B). The look and feel settings are viewable by the user from his/her user client computer 182 if the user is using the eRoom application 110 (Figure 1A).

The CSS variable is called from a master configuration file (config.ini file) 130 (Figure 1B) through the DLL 125 (Figure 1A), and the CSS variable is placed in the eRoom native code in the eRoom application 110 in order to set the look and feel of eRoom instance. The DLL 125 can access the master configuration file (config.ini file) 130 to obtain properties of applications in the eRoom environment 180 (Figure 1B).

The default logo path field 310 permits the administrator to set a banner image 315 that is displayed on top of every eRoom page by default. The variable in this field 310 points to the banner image 315 that is shown on top of every page. The default logo height field 320 sets the height measurement of the logo, while the default logo width field 325 sets the width measurement of the logo. The DLL 125 points to the configuration file 130 in order to display the banner image 315 on top of every page such as page 300. The banner image 315 can be programmed by the administrator in "Top Banner Code" field 350 or the administrator can place a link in the field 350 where the link contains the desired banner image.
As known to those skilled in the art, an API is the specific method prescribed by a computer operating system or by an application program by which a programmer writing an application program can make requests to the operating system or another application. DLL files are dynamically linked with the program that uses them during program execution rather than being compiled with the main program. The set of such files (or the DLL) is somewhat comparable to the library routines provided with programming languages such as C and C++.

The map message field 335 permits the administrator to set or customize the map messages that are displayed under the navigation panel 205 on the left side of each eRoom page. For example, the administrator can input in the map message field 335 the following text that will be displayed in the navigation panel 205:
"For eRoom support, please call the Helpdesk at phone number (YYY) YYY-YYYY."

Alternatively or additionally, the administrator can input in the map message field 335 an HTML (hypertext markup language) link that will be displayed under the navigation panel 205. In the example of Figure 3, the map message field 335 is set to permit a logo 261 to be displayed in the navigation panel 205.

The security message field 343 permits the administrator to set a customizable security message 344 that will appear in a login page on a computer screen of a user client computer 182, before the user can type in his/her username and login password. The security message 344that is typed into this field 343 will appear in the login page 230 (Figure 2) and is advantageously not passed from the eRoom native code to the login page. Alternatively, the administrator can place a link in the field 344 where the link contains the security message 344.

The security message 344 may show, for example, the following text:
"This is a private system. Authorization is required to use this system."

The default eroom login page 230 is modified to read the security message setting in the config.ini 130 (Figure 1B) through accessing the DLL 125 Figure 1A.

The display top banner check box 345 permits the administrator to display (or to not display) a custom top banner 315 on top of each eRoom page. The custom top banner 315 may be, for example, a banner relating to the website of the company that has licensed the system 100 (see Figure 1A). By checking (or not checking) the check box 345, an administrator can toggle the custom banner 315 as on or off, without having to remove the custom banner code in the eRoom native code. Certain eRoom pages were modified to use the config.ini 130 (Figure 1B) to access settings relating to the showing of the banner 315 via by accessing the DLL 125 (Figure 1B) .

The top banner code field 350 permits the administrator to set the custom top banner 315 that will be displayed on top of each eRoom page. For example, text and/or HTML links to a banner image can be input into the field 350 in order to display the text or the banner image on top of each eRoom page.

A legal notice field 355 permits the administrator to display (or not display) a copyright notice 360 in each eRoom page, such as a copyright message as shown, for example, in field 264 in Figure 2. A field 356 permits input of a URL (Uniform Resource Locator) that points to a privacy statement, where the privacy statement link is shown, for example, in field 262 in Figure 2. A field 357 permits input of a URL that points to a legal notice, where the legal notice link is shown, for example, in field 263 in Figure 2. Text can be input into the copyright notice field 355 for display on each eRoom page. Alternatively or additionally, HTML links to a copyright notice or other legal notice(s) can be input into the field 355 in order to display the copyright notice or other legal notice(s) on each eRoom page. A button 358 permits the settings in the page 300 to be saved, while a button 359 permits the settings in the page 300 to be reset. When a variable is changed (e.g., in field 305 or 310 or 320 or other fields in page 300) and the save button 358 is clicked, then the DLL 125(Figure 1A) is called and is passed the variables values. The DLL 125 updates the config.ini 130 in Figure 1B for the variable changes.

A display privacy statement check box 361 permits the administrator to display the privacy statement link in the pages. A display legal notice check box 362 permits the administrator to display the legal notice link in the pages.

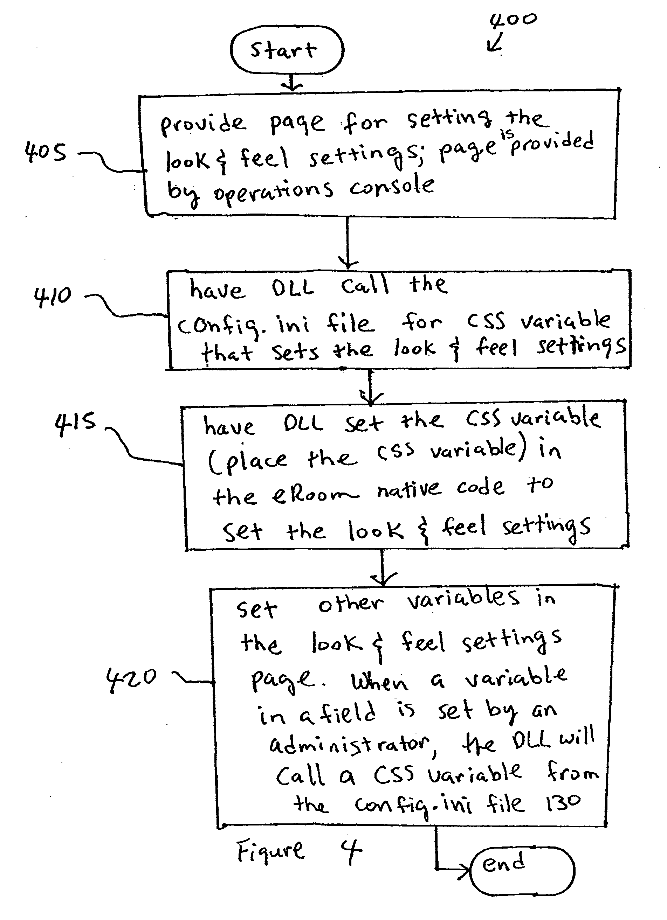

Figure 4 is a flowchart illustrating a method 400 of permitting the settings and control of look and feel settings from a single location, in accordance with an embodiment of the invention.

In step 405, a page is provided for setting the look and feel settings for an eRoom instance of an administrator. The control console module 105 (Figure 1A) provides the page to a computer screen and receives the variables that are input into the page by the administrator.

In step 410, the DLL 125 calls a configuration file 130 (config.ini file 130) to obtain a CSS variable that sets the look and feel settings for an eRoom instance(s) 180 of an administrator.

In step 415, the DLL 125 places the CSS variable in the eRoom native code (in eRoom application 110) in order to set the look and feel settings for eRoom instances.

In step 420, the administrator can set other variables in the fields in the look and feel settings page 300 (see Figure 3) in order to set other eRoom instances. For example, the administrator can set the variables in the map message field 335 (see Figure 3). When the other variable(s) is set in the look and feel settings page 300 by an administrator, the DLL 125 will call an appropriate CSS variable in the config.ini file 130 to set the particular eRoom instance.

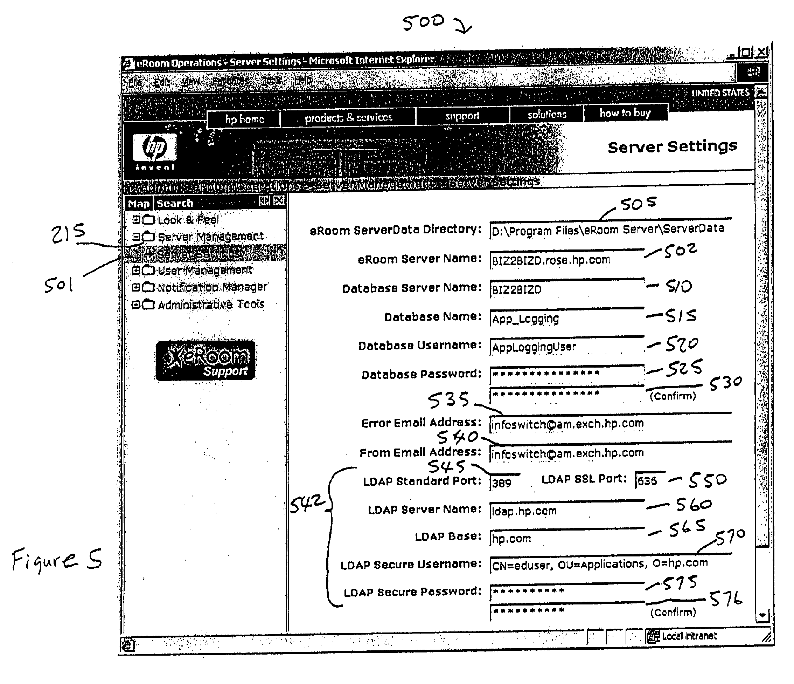

Figure 5 is a screenshot diagram of an interface page 500 when a folder for the server management tool 215 is selected, in accordance with an embodiment of the invention. The functionalities of the server management tool 215 are provided by code in the server settings module 135. The server management tool 215 permits configurations of the server settings which are common settings that are shared between the applications in a computer environment with the eRoom application 110 or eRoom instance.

The eRoom ServerData Directory field 505 indicates the location of an eRoom ServerData directory which stores all of the eRoom files, such as the various web page information used by the eRoom application 110 and information used by other applications in the eRoom environment. The config.ini 130 is typically stored in the same directory as the DLL 125 which can be located on any system volume.

The eRoom Server Name field 502 indicates a server name that stores the eRoom application 110.

The Database Server Name field 510 indicates an SQL server name were a database 146 is stored, where the database 146 contains all application specific data for the eRoom operations environment. This database is also called a "data warehouse database". An SQL server is shown, for example, as server 145 in Figure 1B.

The Database Name field 515 indicates the name of the database in the SQL server 145.

The Database username field 520 requires a username of a user who has authorization to access the database in the SQL server.

The Database password fields 525 and 530 require a password corresponding to a username in the username field for a user who has access to the database in the SQL server.

Therefore, the fields 510 to 525 are related to the function of the data warehouse database in the SQL server.

The Error Email Address field 535 indicates the email address to which eRoom operations related applications will send an error message to in order to report the error message.

The From Email Address field 540 indicates the email address of any outgoing eRoom operations messages that are sent out by each application to a user, when an error occurs in an application.

Therefore, the fields 535 and 540 are email address fields for purposes of error capturing and reporting.

The LDAP related fields 542 are configured for LDAP (Lightweight Directory Access Protocol) systems that are company specific and are now discussed.

The LDAP Standard Port field 545 is used by applications that are integrated with LDAP in order for the applications to access an LDAP server. The LDAP server contains a directory of user accounts which can be used by the eRoom application 110 (Figure 1A) for authentication. This field 545 will typically indicate the 389 standard open port for querying public LDAP information.

The LDAP SSL Port field 550 is used by applications that are integrated with LDAP in order for the applications to access an LDAP server through SSL (secure socket layer). This field 550 will typically indicate the 636 encrypted port used for secure authentication and private information.

The LDAP Server Name field 560 indicates the name of the LDAP server that is used by applications that are integrated with LDAP.

The LDAP Base field 565 indicates the base used by applications that search the LDAP server, where the base is defined as the top of the search tree.

The LDAP Secure Username Field 570 requires a username of a user who has authorized access to the secure non public LDAP server information.

The LDAP Secure Password fields 575 and 576 require a password corresponding to a username in the username field for a user who has authorized access to the LDAP server.

When a variable in the page 500 is changed and the save button is clicked, the DLL 125 (Figure1A) is called and is passed the variables values. The DLL 125 (Figure 1A) updates the config.ini 130 in Figure 1B.

It is further noted that if the user aging tool 220b (Figure 2) is selected in the user management tool 220 folder, then an administrator can configure the settings for the user aging tool 220b by used of the operations console module 105. Methods for user aging are disclosed in, for example, commonly-assigned U.S. Patent Application No. 10/XXX,XXX, entitled "eRoom User Aging Tool And Method, by Anthony A. Huscher, Kevin D. Keller, and Troy C. Whitlow, filed on February 14, 2003, which is hereby fully incorporated herein by reference.

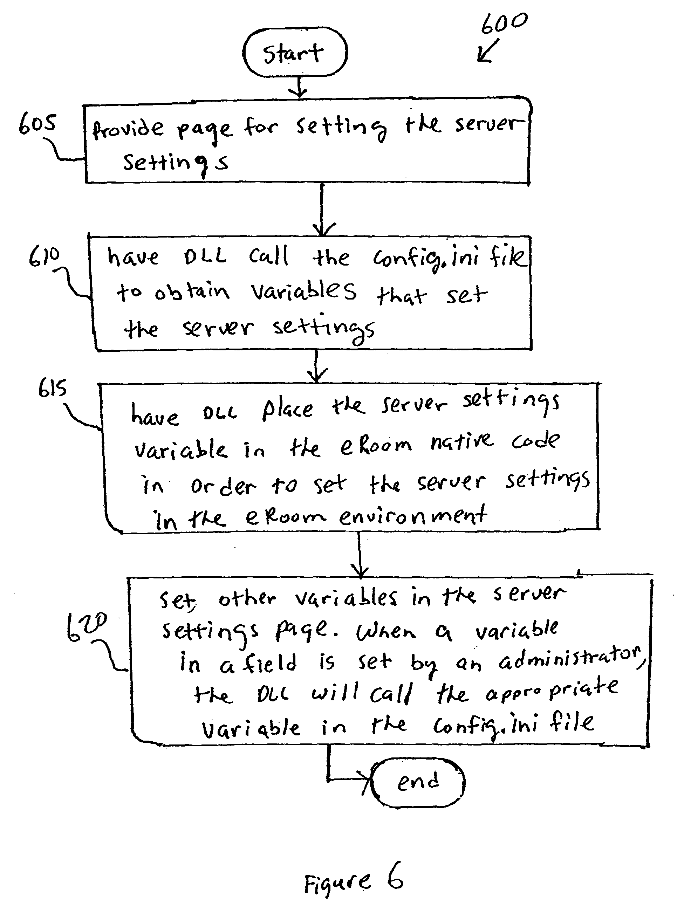

Figure 6 is a flowchart illustrating a method 600 of permitting the settings for a server for functioning in an eRoom environment, in accordance with an embodiment of the invention.

In step 605, a page is provided for setting the server settings which are common settings that are shared between applications in the eRoom environment 180. The control console module 105 (Figure 1A) provides the page to a computer screen and receives the variables that are input into the page by the administrator.

In step 610, the DLL 125 calls a configuration file 130 (config.ini file 130) to obtain a variable(s) that sets the server settings.

In step 615, the DLL 125 places the server settings variable in the eRoom native code (in eRoom application 110) in order to set the server settings in the eRoom environment 180.

In step 620, the administrator can set other variables in the fields in the server settings page 500 (see Figure 5) in order to set other variables in the server settings. When the other variable(s) in a field in the server settings page 500 is set by an administrator, the DLL 125 will call the appropriate variable in the config.ini file 130 to permit the server settings in the eRoom environment 180.

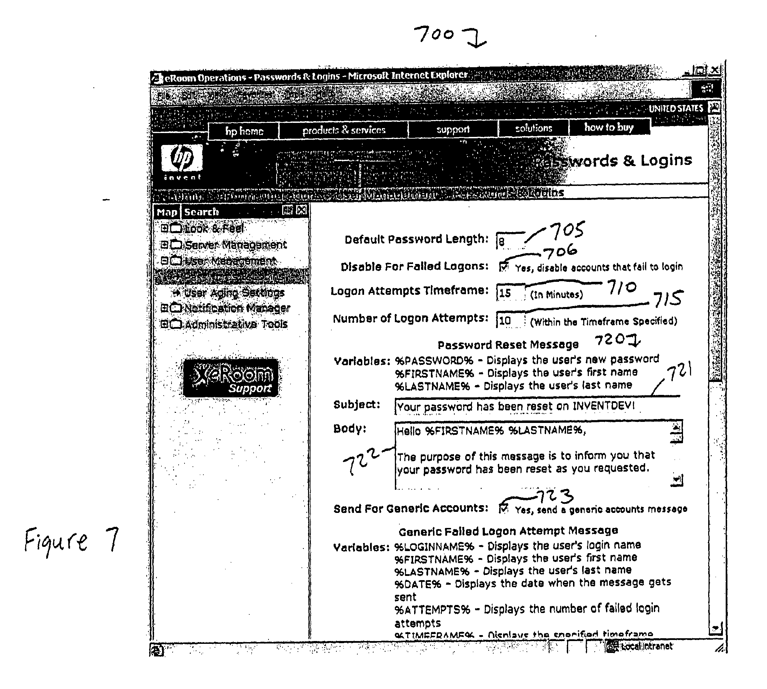

Figure 7 is a screenshot diagram of an interface page 700 when a folder for the passwords & logins tool 220a is selected, in accordance with an embodiment of the invention. The functionalities of the passwords & logins tool 220a are provided by code in the password & logins manager module 140 (see Figure 1A). Specifically, the interface page 700 shows the settings to configure the passwords and logins settings for an eRoom instance of the administrator. This passwords and logins page 700 contains the settings that are used when users log in and when the users select a "forgot password" tool when they forget their passwords for the system 100. When a user tries to login and fails, the user will be prompted with a message indicating how many more attempts that the user will get before his/her user account is locked out.

The Default Password Length field 705 will indicate a length of a new password that is emailed to a user, if the user forgets his/her current password and he/she selects a "Forgot Password?" button or selection. As a result, the user's password is reset to the new password that is emailed to the user. A check box 706 permits an administrator to disable eRoom accounts of users who fail to login.

The Logon Attempts Timeframe field 710 gives the administrator the ability to change the length of a timeframe before a failed logon attempt is disregarded. The Number of Logon Attempts field 715 gives the administrator the ability to change the number of logon attempts that is permitted for a user in the timeframe specified in the Timeframe field 710. For example, the eRoom users could be given 3 longin attempts for every 5 minutes, after which another failed logon attempt within the 5 minutes time frame will result in the user's account to be locked out.

The Password Reset Message field 720 contains the message that an administrator may configure for users who forget their password and received a new password. The field 720 may also include a subject field 721 and messages field 721 related to failed login attempts, accounts that are disabled, and/or help requests. The message in the message field 721 will accompany the new password that is emailed to the user. When a variable in page 700 is changed and the save button is clicked, the DLL 125 (Figure 1A) is called and is passed the variables values. The DLL 125 (Figure 1A) updates the config.ini 130 in Figure 1B.

A check box 723 permits an administrator to send an email message to a user of a generic account in an eRoom instance 180, where the generic account is accessible by any user in the eRoom instance. This email messaqe may, for example, notify the generic account user of the phone number to contact if the generic account user fails to log in the generic account after a given number of log in attempts.

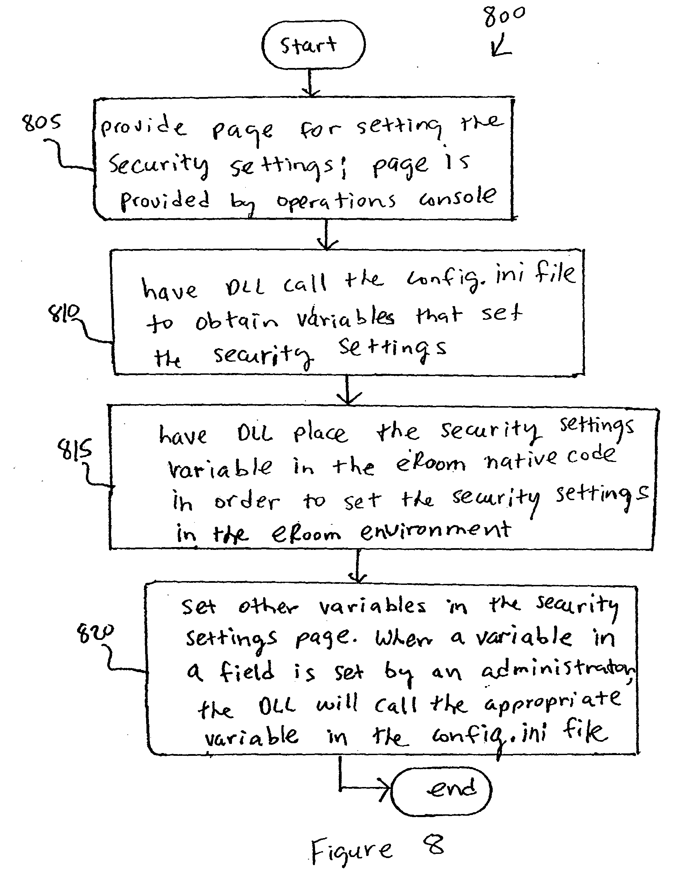

Figure 8 is a flowchart illustrating a method 800 of permitting the settings of security features, in accordance with an embodiment of the invention.

In step 805, a page is provided for setting the security settings in the eRoom environment 180. The control console module 105 (Figure 1A) provides the page to a computer screen and receives the variables that are input into the page by the administrator.

In step 810, the DLL 125 calls a configuration file 130 (config.ini file 130) to obtain a variable(s) that sets the security settings.

In step 815, the DLL 125 places the security settings variable in the eRoom native code (in eRoom application 110) in order to set the security settings in the eRoom environment 180.

In step 820, the administrator can set other variables in the fields in the security settings page 700 (see Figure 7) in order to set other variables in the security settings. When the other variable(s) in a field in the security settings page 700 is set by an administrator, the DLL 125 will call the appropriate variable in the config.ini file 130 to permit the security settings in the eRoom environment 180.

The various engines or tools or modules discussed herein may be, for example, software, commands, data files, programs, code, firmware, instructions, or the like, and may also include suitable mechanisms to perform their intended functionality.

Reference throughout this specification to "one embodiment", "an embodiment", or "a specific embodiment" means that a particular feature, structure, or characteristic described in connection with the embodiment is included in at least one embodiment of the invention. Thus, the appearances of the phrases "in one embodiment", "in an embodiment", or "in a specific embodiment" in various places throughout this specification are not necessarily all referring to the same embodiment. Furthermore, the particular features, structures, or characteristics may be combined in any suitable manner in one or more embodiments.

Other variations and modifications of the above-described embodiments and methods are possible in light of the foregoing teaching.

Further, at least some of the components of an embodiment of the invention may be implemented by using a programmed general purpose digital computer, by using application specific integrated circuits, programmable logic devices, or field programmable gate arrays, or by using a network of interconnected components and circuits. Connections may be wired, wireless, by modem, and the like.

It will also be appreciated that one or more of the elements depicted in the drawings/figures can also be implemented in a more separated or integrated manner, or even removed or rendered as inoperable in certain cases, as is useful in accordance with a particular application.

It is also within the scope of the invention to implement a program or code that can be stored in a machine-readable medium to permit a computer to perform any of the methods described above.

Additionally, the signal arrows in the drawings/Figures are considered as exemplary and are not limiting, unless otherwise specifically noted. Furthermore, the term "or" as used in this disclosure is generally intended to mean "and/or" unless otherwise indicated. Combinations of components or actions will also be considered as being noted, where terminology is foreseen as rendering the ability to separate or combine is unclear.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

## Claims

1. A method of centrally controlling the settings in a computer system in an eRoom environment, including:
providing an interface page by use of an operations console module; and
adjusting settings relating to an eRoom application by setting at least one variable in the interface page.

2. The method of claim 1, wherein the interface page relates to look and feel settings.

3. The method of claim 1, wherein the interface page relates to server settings.

4. The method of claim 1, wherein the interface page relates to security settings.

5. The method of claim 1, wherein the action of adjusting the setting comprises:
calling a configuration file for a cascading style sheet (CSS) variable that sets a look and feel setting in an eRoom instance; and
placing the CSS variable in an eRoom native code in an eRoom application to set the look and feel setting.

6. The method of claim 5, further comprising:
calling the configuration file for a CSS variable that sets another look and feel setting in the eRoom instance; and
placing the CSS variable in the eRoom native code in the eRoom application to set the other look and feel setting.

7. The method of claim 1, wherein the action of adjusting the setting comprises:
calling a configuration file for a server settings variable that sets settings for a server in an eRoom instance; and
placing the server settings variable in an eRoom native code in an eRoom application to set the settings for the server.

8. The method of claim 1, wherein the action of adjusting the setting comprises:
calling a configuration file for a variable that sets settings for security in an eRoom instance; and
placing the variable that sets setting for security in an eRoom native code in an eRoom application to set the security in an eRoom instance.

9. An apparatus for centrally controlling the settings in a computer system in an eRoom environment, the apparatus comprising:
an operations console module configured to provide an interface page and to adjust settings relating to an eRoom application by setting at least one variable in the interface page; and
a processor configured to execute the operations console module.

10. The apparatus of claim 9, wherein the interface page relates to look and feel settings.
